# EUROPEAN PATENT APPLICATION

(11) **EP 1 800 786 A1**
(43) Date of publication of application: **27.06.2007**
(21) Application number: 05078020.4
(22) Date of filing: 22.12.2005
(51) Int. Cl.: B23D 65/02

(54) **Method and apparatus for automatically forming teeth of a straight saw**

(71) Applicant: Fu-Zin Agriculture Supply Inc., Pingtung Hsien (TW)
(72) Inventor: Huang, Sung-Kuang, Pingtung Hsien (TW)
(74) Representative: Martin, Philip John

(57) **Abstract**

A method automatically forms teeth (714, 715) of a straight saw (72) by means of an apparatus (6). The apparatus (6) includes a rotatable worktable (62), a plurality of angularly equidistant holders (64) rotatable with the worktable (62) to move along a circulating path, and a plurality of cutters (631, 632, 633, 634, 635, 636) disposed respectively at a plurality of workstations (81, 82, 83, B4, 85, 86). The method includes:
(a) moving a workpiece (71) into one of the holders (64);
(b) rotating the worktable (62) intermittently so as to move the one of the holders (64) along the circulating path through the workstations (81, 82, 83, 84, 85, 86) sequentially:
(c) advancing each of the cutters (631, 632, 633, 634, 635, 636) to contact the workpiece (71) and moving a corresponding one of the cutters (631, 632, 633, 634, 635, 636) along a longitudinal direction (X) of the workpiece (71) when the one of the holders (64) is disposed at a corresponding workstation, thereby completing formation of the saw (72) at the last workstation (66) ; and
(d) removing the saw (72) from the one of the holders (64) .

## Description

This invention relates to the manufacture of a saw, and more particularly to method and apparatus for automatically forming teeth of a straight saw.

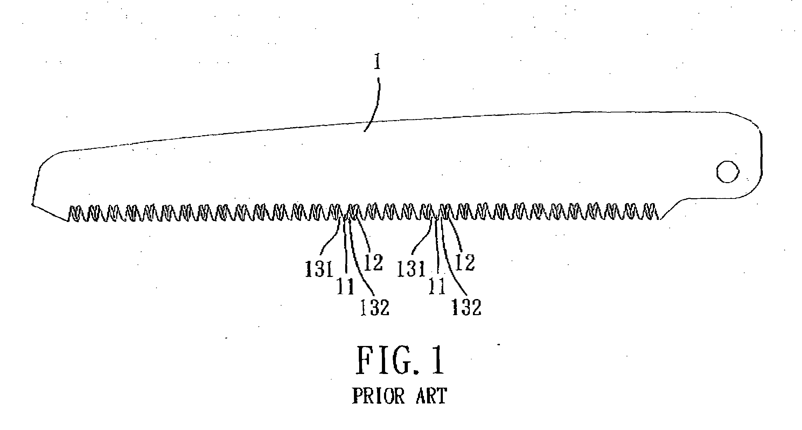

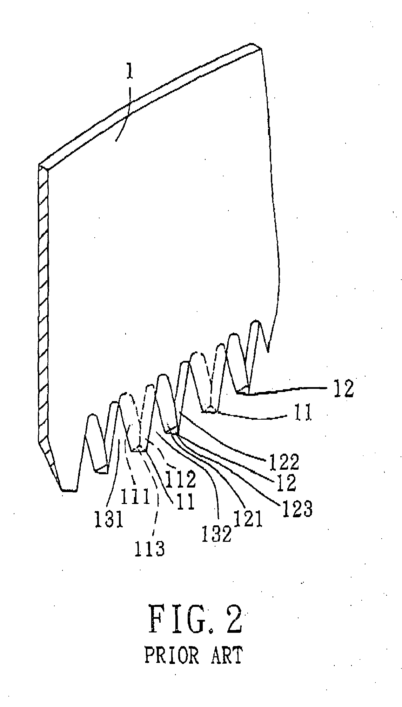

Referring to Figs. 1 and 2, a first conventional straight saw 1 is formed with a longitudinal row of left teeth 11 and a longitudinal row of right teeth 12. Each of the left and right teeth 11, 12 has a front edge 111, 121, a back edge 112, 122, and a tipped edge 113, 123.

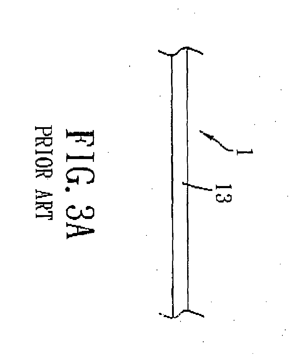

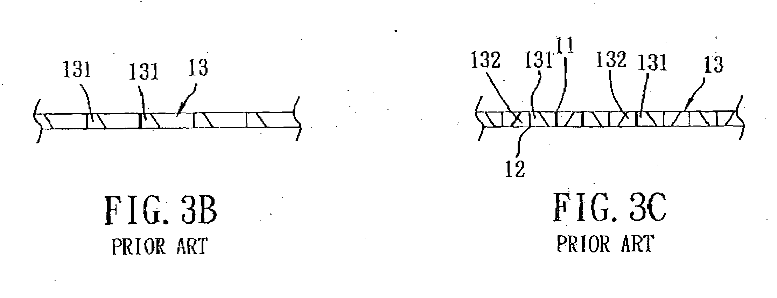

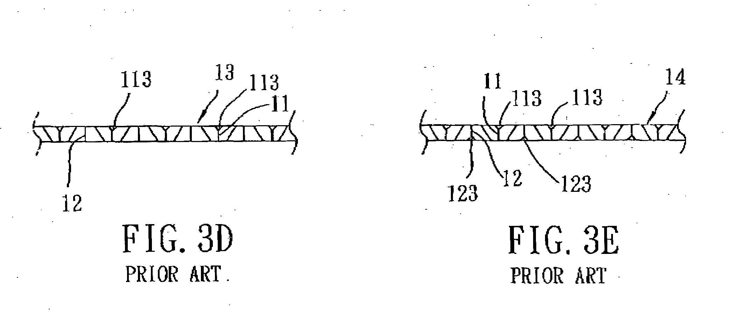

A conventional method for forming the first conventional straight saw 1 includes the following steps:
(a) referring to Fig. 3A, preparing a straight workpiece 13;
(b) referring to Fig. 3B, moving the workpiece 13 manually into a first holder (not shown) and driving a first cutter (not shown) to form a plurality of first grooves 131 in the workpiece 13 so as to define the front edges 111 of the left teeth 11 and the back edges 122 of the right teeth 12;
(c) referring to Fig. 3C, moving the workpiece 13 manually from the first holder into a second holder (not shown), and driving a second cutter (not shown) to form a plurality of second grooves 132 in the workpiece 13 so as to define the back edges 112 of the left teeth 11 and the front edges 121 of the right teeth 12, thereby completing the formation of the left and right teeth 11, 12;
(d) referring to fig. 3D, moving the workpiece 13 manually from the second holder into a third holder (not shown), and driving a third cutter (not shown) to form the tipped edges 113 of the left teeth 11 on the workpiece 13; and
(e) referring to Fig. 3E, moving the workpiece 13 manually from the third holder into a fourth holder (not shown), and driving a fourth cutter (not shown) to form the tipped edges 123 of the right teeth 12 on the workpiece 13, thereby completing the Formation of the saw 1.

Such manual movement of the workpiece 13 among the first, second, third, and fourth holders results in an inefficient saw-manufacturing process. Furthermore, it is difficult to position the workpiece 13 accurately within the first, second, third, and fourth holders. This adversely affects the machining quality of the saw 1.

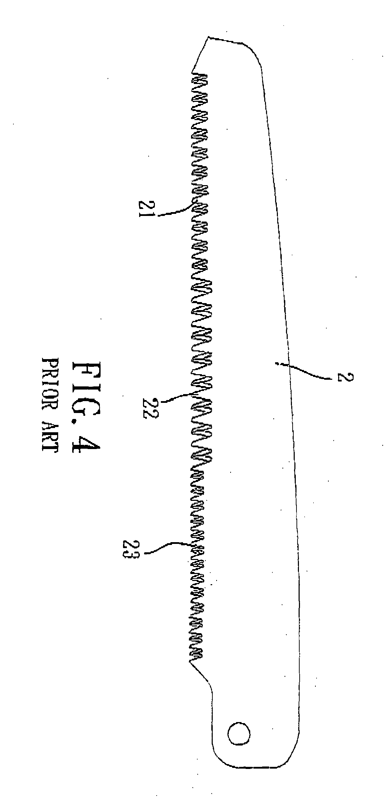

Referring to Fig. 4, a second conventional straight saw 2 is similar in construction to the first conventional straight saw 1 (see Fig. 1) except that it has differently tooth portions, i.e., a middle-size tooth portion 21, a large-size tooth portion 22, and a small-size tooth portion 23. The large-size tooth portion 22 is disposed between the middle-size tooth portion 21 and the small-size tooth portion 23. The number of cutters necessary for manufacturing the second conventional straight saw 2 is about three times that for the first conventional straight saw 1 (see Fig. 1). As a result, the costs and time required in manufacturing the second conventional straight saw 1 are increased.

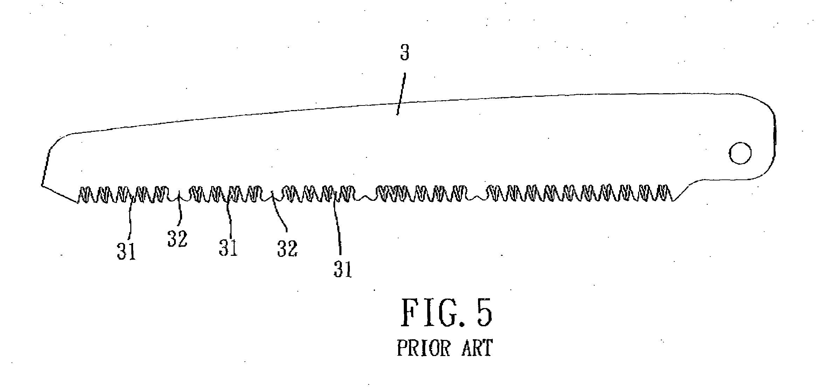

Referring to Fig. 5, a third conventional straight saw 3 has alternately arranged triangular tooth portions 31 and curved tooth portions 32. The triangular tooth portions 31 are similar in construction to the rows of the left and right teeth 11, 12 of the first conventional straight saw 1 (see Fig. 1). As such, in the manufacture of the third conventional straight saw 3, in addition to the steps (3a), (3b), (3c), (3d), and (3e), an additional process is required for forming the curved tooth portions 32.

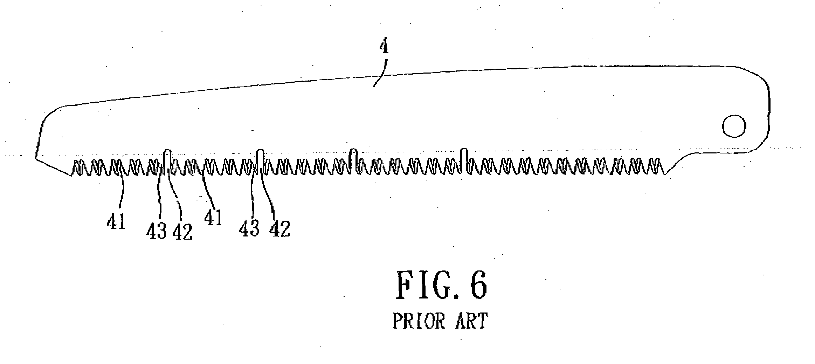

Referring to Fig. 6, a fourth conventional straight saw 4 (made by ARS Edge Co., Ltd., Osaka, Japan) includes a plurality of triangular tooth portions 41, a plurality of open-ended transverse slots 42, and a plurality of inclined teeth 43 disposed respectively in front of and adjacent to the slots 42. The time and costs involved in the manufacture of the fourth conventional straight saw 4 are also more than that of the first conventional straight saw 1 (see Fig. 1).

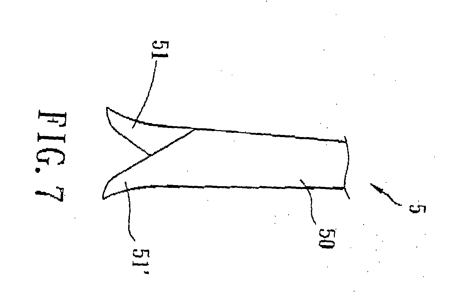

Referring to Fig. 7, a fifth conventional straight saw 5 includes a plurality of teeth 50 (only one is shown), each of which has a leftwardly extending tip 51 and a rightwardly extending tip 51'. As such, an additional process is required for forming the leftwardly extending tips 51 and the rightwardly extending tips 51'.

Since the workpiece is manually moved into and removed from different holders in the processes for manufacturing the first, second, third, fourth, and fifth conventional straight saws 1, 2, 3, 4, 5, the manufacturing precision and efficiency are reduced, as described above.

The object of this invention is to provide a highly precise and efficient method and apparatus for automatically forming teeth of a straight saw.

According to this invention, a method automatically forms teeth of a straight saw by means of an apparatus. The apparatus includes a rotatable worktable, a plurality of angularly equidistant holders rotatable with the worktable to move along a circulating path, and a plurality of cutters disposed respectively at a plurality of workstations. The method comprises:
(a) moving a workpiece into one of the holders;
(b) rotating the worktable intermittently so as to move the one of the holders along the circulating path through the workstations sequentially;
(c) advancing each of the cutters to contact the workpiece and moving a corresponding one of the cutters along a longitudinal direction of the workpiece when the one of the holders is disposed at a corresponding workstation, thereby completing the formation of the saw at the last workstation; and
(d) removing the saw from the one of the holders.

These and other features and advantages of this invention will become apparent in the following detailed description of the preferred embodiments of this invention, with reference to the accompanying drawings, in which:
Fig. 1 is a schematic side view of a first conventional straight saw;
Fig. 2 is a fragmentary perspective view of the first conventional straight saw;
Figs. 3A, 3B, 3C, 3D, and 3E are schematic fragmentary bottom views of a workpiece to be formed into the first conventional straight saw, illustrating a method for forming the first conventional straight saw;
Fig. 4 is a schematic side view of a second conventional straight saw;
Fig. 5 is a schematic side view of a third conventional straight saw;
Fig. 6 is a schematic side view of a fourth conventional straight saw;
Fig. 7 is a fragmentary schematic view of a tooth of a fifth conventional straight saw;
Fig. 8 is a schematic top view of the first preferred embodiment of an apparatus for forming teeth of a straight saw according to this invention;
Figs. 9A, 9B, 9C, 9D, 9E, 9F, and 9G are schematic fragmentary bottom views of a workpiece to be formed into the straight saw by the first preferred embodiment, illustrating a method for automatically forming the teeth of the straight saw according to this invention;
Fig. 10 is a fragmentary perspective view of the straight saw formed by the method of this invention; and
Fig. 11 is a schematic top view of the second preferred embodiment of an apparatus for automatically forming teeth of a straight saw according to this invention.

Before the present invention is described in greater detail in connection with the preferred embodiments, it should be noted that similar elements and structures are designated by like reference numerals throughout the entire disclosure.

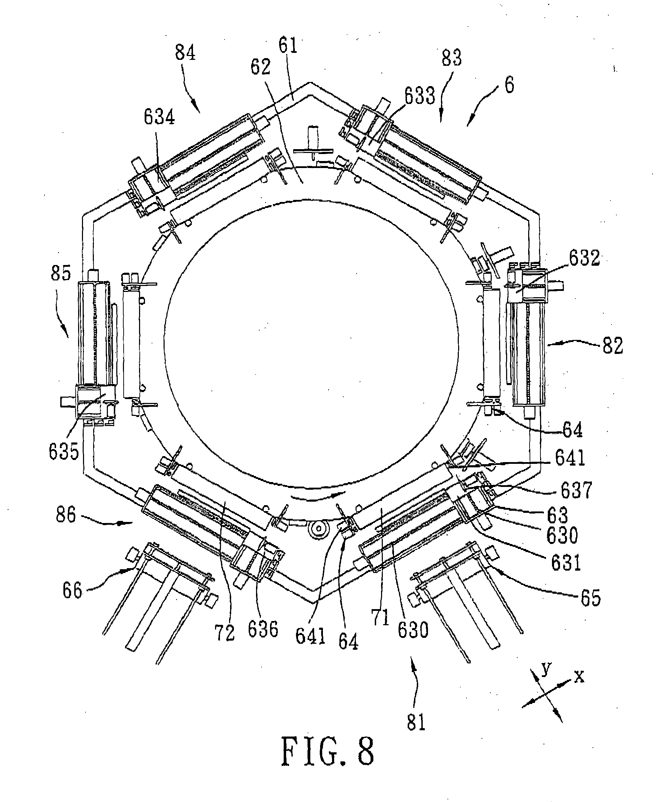

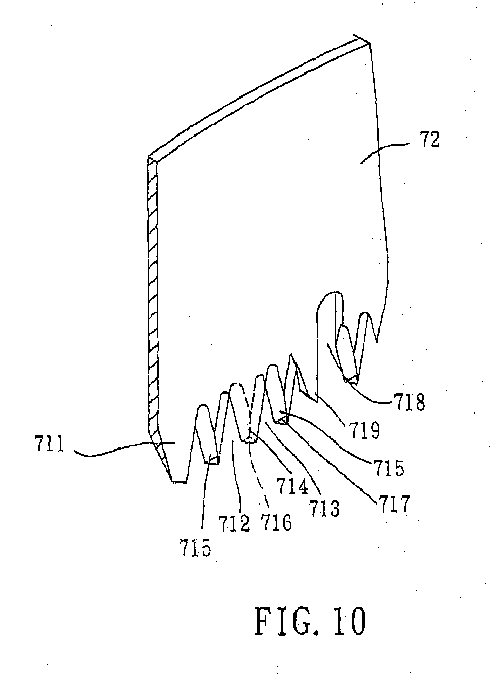

Referring to Figs. 8 and 10, the first preferred embodiment of an apparatus 6 according to this invention is adapted for automatically forming left and right teeth 714, 715 of a straight saw 72 (made by ARS Edge Co., Ltd., Osaka, Japan). The apparatus 6 includes a machine bed 61, a worktable 62, a cutter unit 63, a plurality of angularly equidistant holders 64, a feeding unit 65, and a removing unit 66. There are a total of six of the holders 64. The apparatus 6 is adapted to machine a workpiece 71 so as to form the straight saw 72.

The worktable 62 is disposed on the machine bed 61, and is rotatable intermittently in a counterclockwise direction.

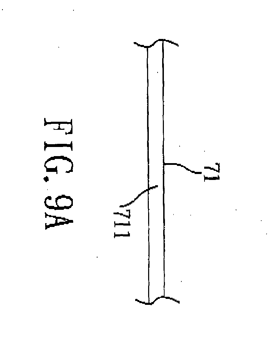

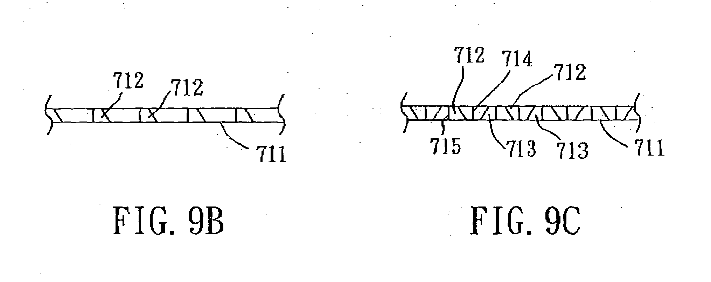

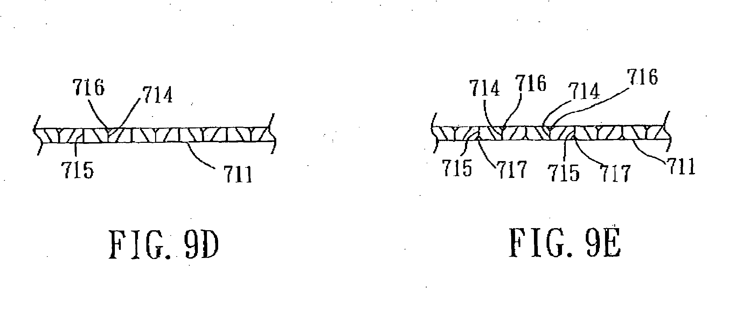

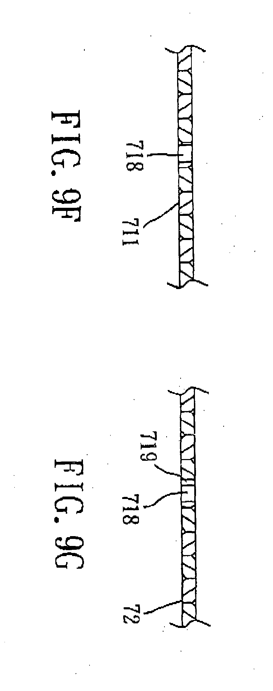

The cutter unit 63 is disposed, in proximity to the worktable 62, and has angularly equidistant first, second, third, fourth, fifth, and sixth cutters 631, 632, 633, 634, 635, 636 disposed outside of the worktable 62 and arranged along the counterclockwise direction. The first, second, third, fourth, fifth, and sixth cutters 631, 632, 633, 634, 635, 636 are arranged along a circle, and are adapted to form six tooth portions on the workpiece 71. The process for forming the straight saw 72 from the workpiece 71 includes:
(1) forming first grooves 712 (see Fig. 9B) in a blade portion 711 of the workpiece 71 by means of the first cutter 631;
(2) forming second grooves 713 (see Fig. 9C) in the blade portion 711 by means of the second cutter 632;
(3) forming tipped edges 716 (see Fig. 9D) of the left teeth 714 on the blade portion 711 by means of the third cutter 633;
(4) forming tipped edges 717 (see Fig. 9E) of the right teeth 715 on the blade portion 711 by means of the fourth cutter 634;
(5) forming slots 718 (see Fig. 9F) in the blade portion, 711 by means of the fifth cutter 635; and
(6) forming inclined teeth 719 (see Fig. 9G) on the blade portion 711 by the sixth cutter 636.

The holders 64 are disposed fixedly on the worktable 62, and are rotatable with the worktable 62 to move along a circular circulating path so as to align respectively with the first, second, third, fourth, fifth, and sixth cutters 631, 632, 633, 634, 635, 636 at first, second, third, fourth, fifth, and sixth workstations 81, 82, 83, 84, 85, 86, respectively. During actual saw production, a plurality of workpieces 71 are moved respectively and individually into the holders 64 at the first workstation 81 by the feeding unit 65. The first, second, third, fourth, fifth, and sixth cutters 631, 632, 633, 634, 635, 636 are disposed respectively at the first, second, third, fourth, fifth, and sixth workstations 81, 82, 83, 84, 85, 86. In each of the first, second, third, fourth, fifth, and sixth workstations 81, 82, 83, 84, 85, 86, a corresponding one of the first, second, third, fourth, fifth, and sixth cutters 631, 632, 633, 634, 635, 636 can be moved along longitudinal and transverse directions (X, Y) of the corresponding workpiece 72 by two threaded rods 630 perpendicular to each other. As such, when one of the first, second, third, fourth, fifth, and sixth cutters 631, 632, 633, 634, 635, 636 advances to contact the corresponding workpiece 71, it is movable along the longitudinal direction (X) of the corresponding workpiece 71.

Each of the holders 64 is movable through the first, second, third, fourth, fifth, and sixth workstations 81, 82, 83, 84, 85, 86 sequentially so as to allow a corresponding one of the first, second, third, fourth, fifth, and sixth cutters 631, 632, 633, 634, 635, 636 to form the corresponding tooth portions on the corresponding workplace 71. Hence, the saw 72 undergoes final formation at the sixth workstation 86. Subsequently, the saw 72 can be removed from the corresponding holder 64 by the removing unit 66.

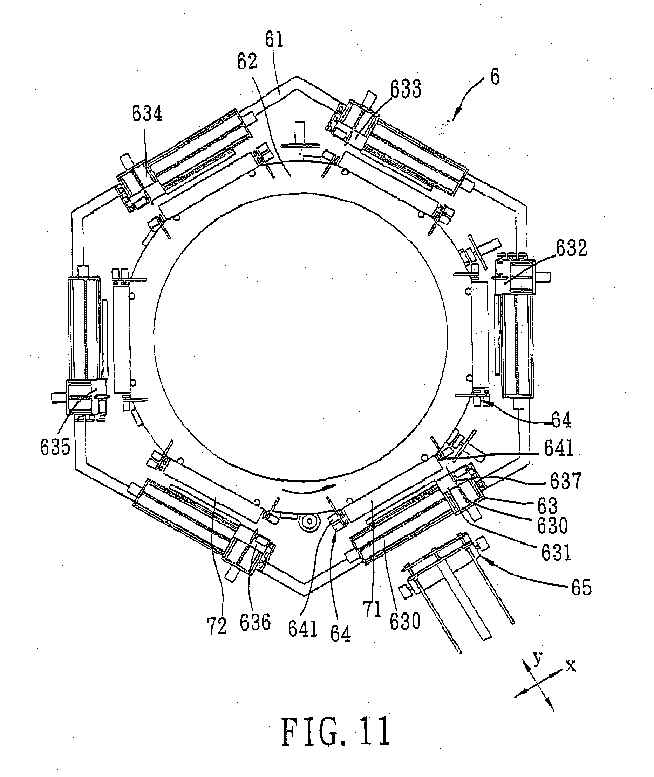

Alternatively, the removing unit 66 is omitted, as shown in Fig. 11, and the feeding unit 65 has both workpiece-feeding and saw-removing functions,

A method for automatically forming the teeth 714, 715 of the saw 72 according to this invention includes the following steps:
(a) moving one workpiece 71 into one holder 64 so as to allow the workpiece 71 to be clamped within the holder 64;
(b) rotating the worktable 62 intermittently so as to move the holder 64 along the circulating path through the first, second, third, fourth, fifth, and sixth workstations 81, 82, 83, 84, 95, 86 sequentially;
(c) advancing each of first, second, third, fourth, fifth, and sixth cutters 631, 632, 633, 634, 635, 636 to contact the workplace 71 along the transverse direction (Y) of the workpiece 71 and moving a corresponding one of the first, second, third, fourth, fifth, and sixth cutters 631, 632, 633, 634, 635, 636 along the longitudinal direction (X) of the workpiece 71 so as to form the corresponding tooth portions on the workpiece 71 when the holder 64 is disposed at a corresponding one of the first, second, third, fourth, fifth, and sixth workstations 81, 82, 83, 84, 85, 86, thereby completing the formation of the saw 72 at the sixth workstation 86; and
(d) removing the saw 72 from the holder 64.

## Claims

1. A method for automatically forming teeth (714, 715) of a straight saw (72) by means of an apparatus (6), each of the teeth (714, 715) having a plurality of tooth portions, the apparatus (6) including a worktable (62) rotatable in a direction, a cutter unit (63) disposed in proximity to the worktable (62), a plurality of angularly equidistant holders (64) disposed on the worktable (62) and rotatable with the worktable (62) to move along a circulating path, and a plurality of workstations (81, 82, 83, 84, 85, 86) disposed along the circulating path, the cutter unit (63) having a plurality of cutters (631, 632, 633, 634, 635, 636) arranged along the circulating path and disposed respectively at the workstations (81, 82, 83, 84, 85, 86), **characterized by** the method comprising the steps of:
(a) moving a workpiece (71) into one of the holders (64) so as to allow the workpiece (71) to be clamped within the one of the holders (64);
(b) rotating the worktable (62) intermittently so as to move the one of the holders (64) along the circulating path through the workstations (81, 82, 83, 84, 85, 86) sequentially;
(c) advancing each of the cutters (631, 632, 633, 634, 635, 636) to contact the workpiece (71) along a transverse direction (Y) of the workpiece (71) and moving a corresponding one of the cutters (631, 632, 633, 634, 635, 636) along a longitudinal direction (X) of the workpiece (71) so as to form corresponding ones of the tooth portions on the workpiece (71) when the one of the holders (64) is disposed at a corresponding one of the workstations (81, 82, 83, 84, 85, 86), thereby completing formation of the saw (72) at the last one of the workstations (81, 82, 83, 84, 85, 86); and
(d) removing the saw (72) from the one of the holders (64).

2. The method as claimed in Claim 1, **characterized in that** the circulating path is circular.

3. An apparatus (6) for automatically forming teeth (714, 715) of a saw (72), the teeth (714, 715) having a plurality of tooth portions, **characterized by**:
a worktable (62) rotatable intermittently in a direction;
a cutter unit (63) disposed in proximity to the worktable (62) and having a plurality of angularly equidistant cutters (631, 632, 633, 634, 635, 636) disposed outside of the worktable (62);
a plurality of angularly equidistant holders (64) disposed fixedly on the worktable (62) and rotatable with the worktable (62) to move along a circulating path so as to align respectively with the cutters (631, 632, 633, 634, 635, 636), one of the holders (64) being adapted to clamp a workpiece (71) therewithin; and
a plurality of workstations (81, 82, 83, 84, 85, 86) arranged along the circulating path, the cutters (631, 632, 633, 634, 635, 636) being disposed respectively at the workstations (81, 82, 83, 84, 85, 86), each of the holders (64) being movable through the workstations (81, 82, 83, 84, 85, 86) sequentially so as to allow a corresponding one of the cutters (631, 632, 633, 634, 635, 636) to form corresponding ones of the tooth portions on the workpiece (71), thereby completing formation of the saw (72), after which the saw (72) is removed from the one of the holders (64).

4. The apparatus (6) as claimed in Claim 3, **characterized in that** the cutters (631, 632, 633, 634, 635, 636) are arranged along a circle.

5. The apparatus (6) as claimed in Claim 3, **characterized in that** each of the cutters (631, 632, 633, 634, 635, 636) is movable along a longitudinal direction (X) of the workpiece (71) at a corresponding one of the workstations (81, 82, 83, 84, 85, 86) when a corresponding one of the cutters (631, 632, 633, 634, 635, 636) advances to contact the workpiece (71).

6. The apparatus (6) as claimed in Claim 3, further comprising a feeding unit (65) for moving the workplace (71) into the one of the holders (64) before the teeth (714, 715) are formed on the workpiece (71).

7. The apparatus (6) as claimed in Claim 3, further comprising a removing unit (66) for removing the saw (72) from the one of the holders (64) after the saw (72) is formed.

8. The apparatus (6) as claimed in Claim 3, **characterized in that** the number of the workstations (81, 82, 83, 84, 85, 86) is six.
